## Europäisches Patentamt

(19) ## European Patent Office

## Office européen des brevets

(11) Veröffentlichungsnummer: **0 148 930 B1**

(12) # EUROPÄISCHE PATENTSCHRIFT

(45) Veröffentlichungstag der Patentschrift:
28.10.87

(51) Int. Cl.⁴: **A 61 C 9/00,** A 61 C 13/00

(21) Anmeldenummer: **84902785.9**

(22) Anmeldetag: **12.07.84**

(86) Internationale Anmeldenummer:
**PCT/DE 84/00143**

(87) Internationale Veröffentlichungsnummer:
**WO 85/00283 (31.01.85** Gazette **85/3)**

(54) **ZAHNKRANZMODELL.**

(30) Priorität: **14.07.83 DE 3325473**

(43) Veröffentlichungstag der Anmeldung:
**24.07.85 Patentblatt 85/30**

(45) Bekanntmachung des Hinweises auf die Patenterteilung:
**28.10.87 Patentblatt 87/44**

(84) Benannte Vertragsstaaten:
**AT BE CH DE FR GB LI LU NL SE**

(56) Entgegenhaltungen:
**EP - A - 0 116 163**
**DE - A - 2 431 477**
**FR - A - 1 533 372**

(73) Patentinhaber: **WOLZ, Stefan, Rastatter Strasse 43,**
**D-6800 Mannheim-Seckenheim (DE)**

(72) Erfinder: **WOLZ, Stefan, Rastatter Strasse 43,**
**D-6800 Mannheim-Seckenheim (DE)**

(74) Vertreter: **Seibert, Rudolf, Dipl.-Ing.,**
**Tattenbachstrasse 9, D-8000 München 22 (DE)**

## Beschreibung

Die vorliegende Erfindung bezieht sich auf ein Zahnkranzmodell, also auf ein Modell, wie es zur Anfertigung von Zahnprothetik nach einem Abguss des Ober- oder Unterkiefers eines Patienten, vorzugsweise aus Gips erstellt wird.

Es ist – beispielsweise durch die DE-A-2431477 – bekannt, ein Zahnkranzmodell, dort Sägemodell genannt, zur Erleichterung der Arbeit lösbar mit einer Grundplatte zu verbinden, wobei dem Zahnabguss eine Patrizenleiste und der Grundplatte eine entsprechende Matrizenleiste zugeordnet wird oder umgekehrt, so dass die einzelnen durch Absägen gewonnenen Abschnitte in ihrer Längsausdehnung genau fixiert in die Grundplatte eingesetzt werden können, so dass eine Zahnreihe nach dem Zersägen exakt wieder zusammengesetzt werden kann, wobei alle abgeformten Partien von Kiefer und Gaumen in ihrer gegenseitigen Lage und Anordnung zueinander erkennbar sind. Dabei werden Patrizenleiste und Matrizenleiste zickzackförmig ausgebildet mit einem Abstand der jeweiligen Scheitel, der nicht grösser ist als der kleinste Sägeabschnitt, also der schmälste abzubildende Zahn, wodurch auch für einzelne Zähne eine einwandfreie Zuordnung in der Grundplatte garantiert ist.

Nachteilig bei einer derartigen Anordnung ist, dass zwar für die einzelnen Modellabschnitte ein einwandfreier Sitz in Längsrichtung der nutförmigen Patrize garantiert ist, dass aber beim Bearbeiten der einzelnen Abschnitte, insbesondere Abgüsse einzelner Zähne, ein Lösen, Verschieben oder gar Herausfallen des entsprechenden Teiles nicht vermieden wird.

Aufgabe der Erfindung ist es, Zahnmodelle der vorgenannten Art so weiterzubilden, dass ein einwandfreier Sitz auch einzelner kurzer Abschnitte in allen drei Dimensionen einwandfrei garantiert ist, so dass eine Bearbeitung, z. B. Modellierung auch eines einzelnen Zahnes im Modell selbst ermöglicht wird, ohne dass auch nur geringfügige Verschiebungen oder Verkantungen in Kauf genommen werden müssten.

Diese Aufgabe wird mit einem Zahnkranzmodell mit den Merkmalen des Patentanspruches 1 gelöst. Vorteilhafte Weiterbildungen ergeben sich aus den Unteransprüchen.

Bei dem Zahnkranzmodell nach der Erfindung wird also neben einer Verbindung nach Art von Feder und Nut zwischen Sockelplatte und Zahnabguss noch eine Sicherung vorgesehen, die einen einwandfreien Sitz der einzelnen gegebenenfalls durch Zersägen hergestellten Abschnitte auch entgegen einer Bewegung aus der Nut heraus garantiert.

Diese vorstehend pauschal angegebenen Massnahmen können gemäss verschiedener vorteilhafter Weiterbildungen des Erfindungsgedankens auf mannigfache Weise realisiert werden.

Dabei ist die Aufnahmenut für die Feder in der Sockelplatte angeordnet, da die Anbringung einer Nut in dem Zahnabguss selbst notwendigerweise zu einer Schwächung des etwa die Tiefe eines Zahnes aufweisenden Abgusses führen würde, was leicht zu Ausbrechungen führen kann, und zwar insbesondere deshalb, weil ja an den abgebildeten Zähnen selbst gearbeitet werden muss, um diese z. B. zu modellieren, zu schleifen usw.

Die Grundplatte selbst hingegen kann aus einem im Vergleich zu Gips oder einer anderen Abgussmasse sehr viel härteren Material gefertigt werden, in welchem dann die Anbringung einer Halte- oder Führungsnut keine ernsten Festigkeitsprobleme mit sich bringt.

Im besonderen kann dann auch, wie an späterer Stelle noch im einzelnen erläutert wird, die Nut durch zwei auf die Abdeckplatte aufgesetzte Bänder, z. B. aus einem Plastikmaterial, gebildet werden, die in ihrer Dicke so gehalten sind, dass die für die Zwecke eines Zahnkranzmodelles notwendige Festigkeit garantiert ist.

Die Führung der Feder in der Nut muss so sein, dass eine definierte örtliche Fixierung garantiert ist, was durch die Anbringung verschiedener Rastungen in Form von Unregelmässigkeiten im Verlauf der Nut selbst oder am oberen Rand der die Nut begrenzenden Kanten erfolgen kann.

Einzelheiten eines Zahnkranzmodelles werden im folgenden anhand von zwei möglichen Ausführungsbeispielen in Verbindung mit der anliegenden Zeichnung erläutert.

In dieser Zeichnung zeigen:

Fig. 1 eine perspektivische Ansicht eines Zahnkranzmodelles zur Erläuterung des Grundaufbaus,

Fig. 2 die Draufsicht auf eine Sockelplatte mit eingegossener Nut,

Fig. 3 zwei (Backen-) Zähne aus einem Zahnkranzmodell mit der entsprechenden Feder für eine Nut in einer Sockelplatte nach Fig. 2,

Fig. 4 die Ansicht des Teiles des Zahnabgusses nach Fig. 3 von unten,

Fig. 5 den Aufbau einer Sockelplatte gemäss einer anderen Ausführungsform,

Fig. 6 die Draufsicht auf eine Sockelplatte mit einem Aufbau gemäss Fig. 5,

Fig. 7 und Fig. 8 einen einzelnen Zahn mit Feder, wie er in einem Zahnkranzmodell nach den Figuren 5 und 6 einsetzbar ist, und zwar im Bereich der getrichelten Linie VII in Fig. 6.

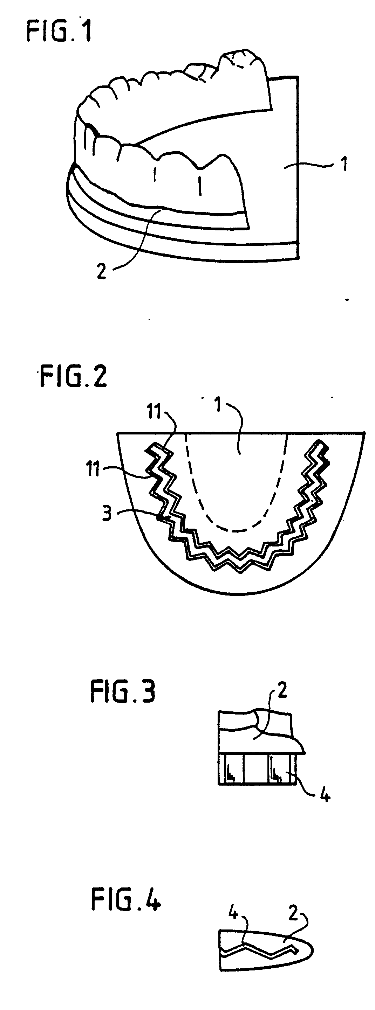

Die Figuren 1 bis 4 zeigen eine Ausführungsform eines Zahnkranzmodelles. In diesen Figuren ist mit 1 jeweils eine Grundplatte bezeichnet, auf der ein Zahnabguss 2 örtlich fixiert so befestigt wird, dass die einzelnen Zähne bearbeitet werden können. Die Befestigung wird dabei so vorgenommen, dass ein Druchtrennen des Zahnabgusses, derart, dass einzelne Zähne oder Partien von Zähnen stehen bleiben, möglich ist, wobei in jedem Fall die örtliche Fixierung der einzelnen Zähne absolut garantiert wird.

Um dies zu erreichen, sind in die Sockelplatte zwei Zick-Zack-Metallbänder 11 eingegossen, die zwischen sich eine ebenfalls im Zick-Zack verlaufende Nut 3 bilden. In diese Nut 3 wird die in den Zahnabguss 2 eingegossene Feder 4 gesteckt, wobei durch die Zick-Zack-Form eine in der Grundrichtung der Nut absolut feste und senkrecht dazu durch Reibungsschluss haltbare Verbindung hergestellt ist.

Dies ist anschaulich in den Figuren 3 und 4 gezeigt, wo ein Abschnitt des Zahnabgusses im Bereich der hinteren Backenzähne wiedergegeben ist. Die Feder 4 wird dabei beim Herstellen des Abgusses unmittelbar mit eingegossen.

Um einen guten Sitz der Feder in dem Zahnabguss zu garantieren, hat die Feder im eingegossenen Bereich (nicht dargestellte) Durchbrechungen oder Unregelmässigkeiten, in die das Giessmaterial, also beispielsweise der Gips, eindringt bzw. die das Giessmaterial, z. B. der Gips, durchdringt, wodurch ein sicherer und einwandfreier Sitz der Feder in dem Zahnabguss bzw. in den vom Zahnabguss abgetrennten einzelnen Teilen bis zur Grösse eines einzelnen Zahnes gewährleistet ist.

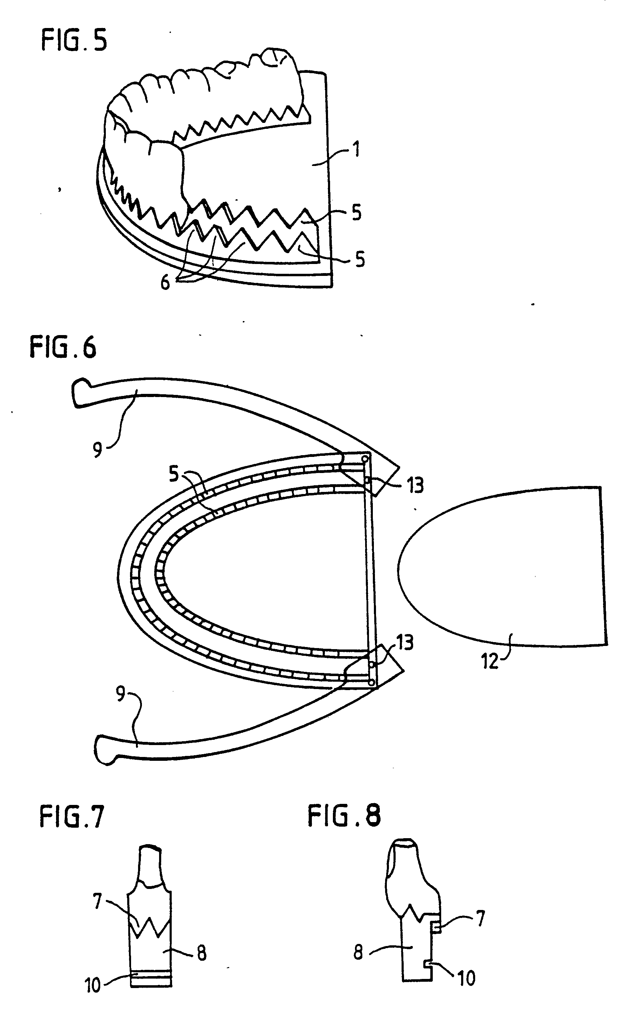

Eine Realisierungsmöglichkeit eines Zahnkranzmodelles mit den Merkmalen nach der Erfindung ist in den Figuren 5 bis 8 wiedergegeben.

Auch bei dieser Ausführungsform ist eine Sokkelplatte 1 vorgesehen, auf der eine Nut zur Einführung einer mit dem Zahnabguss eine bauliche Einheit bildenden Feder geeignet ist. Bei der hier gezeigten Ausführungsform wird aber die Nut zwischen zwei Stegen 5 gebildet, die im wesentlichen den Verlauf eines Zahnabgusses eines Ober- oder Unterkiefers haben. Die Stege 5 sind nach oben gezahnt, um, wie im einzelnen noch erläutert wird, ein Verschieben der einzelnen Zähne innerhalb der Nut in Richtung der Ausnehmung mit Sicherheit zu verhindern.

In diese Nut wird der Zahnabguss bzw. die einzelnen Teile des Zahnabgusses eingesetzt, die in diesem Fall durch einen verlängerten Steg, der aus derselben Gussmasse oder aber auch aus einer anderen Gussmasse als die Zähne selbst bestehen kann, eingeführt.

Die Fig. 6 zeigt eine Draufsicht auf die Sockelplatte, wobei bei dieser Ausführungsform noch Arretierungsarme 9 vorgesehen sind. Diese Arretierungsarme sind in der Darstellung nach aussen geklappt, und zwar um die Schwenkstifte 13. Die Arretierungsarme dienen dazu, den Zahnabguss bzw. die durch ein Auftrennen gegebenenfalls hergestellten Teile des Zahnabgusses nach ihrem Einsetzen in die zwischen die beiden Führungsbänder 5 gebildete Nut an dem vorgesehenen Ort so zu halten, dass sie auch nicht nach oben abgezogen werden können. Zu diesem Zweck sind die zu einer Feder ausgebildeten Verlängerungen 8 der einzelnen Zahnabgüsse mit einer Quernut 10 versehen, in die die Arretierungsarme unterhalb des äusseren Begrenzungsbandes 5 eingeschwenkt werden und diese so gegen ein Herausziehen arretieren.

Um ein Verschieben der einzelnen Teile des Zahnabgusses, also beispielsweise einzelner Zähne, wie einer in den Figuren 7 und 8 von zwei Seiten dargestellt ist, zu verhindern, sind die die Nut begrenzenden Bänder 5 an der Oberseite mit Zacken versehen, die in Formschluss mit Eingriffszähnen 7 an den Abgusszähnen kommen, vorgesehen. Diese Abgusszähne werden bei der Fertigung des Abgusses unmittelbar aus dem Giessmaterial selbst miterzeugt.

Bei dem zuletzt erläuterten Ausführungsbeispiel ist eine ebene Grundplatte vorgesehen, auf der die die Aufnahmenut begrenzenden Bänder, z. B. aus einem Plastikmaterial, wie Plexiglas oder dergleichen, aufgesetzt sind. Sofern für Bearbeitungszwecke Bedarf besteht, auch die Form des Gaumens nachzubilden, kann dies, wie in Fig. 6 angedeutet, dadurch geschehen, dass in den Innenfreiraum ein Kunststoffteil 12, dessen Oberseite einer Gaumennachbildung entspricht, eingesetzt wird.

Die beiden im einzelnen erläuterten Ausführungsbeispiele zeigen, dass die Erfindung in verschiedener Weise realisiert werden kann. Dabei ist im besonderen davon auszugehen, dass die Sokkelplatte nicht, wie dargestellt, eine keinerlei Durchbrechungen aufweisende Platte sein muss. Es ist für die Zwecke der Erfindung lediglich notwendig, dass die im Bereich des Zahnkranzmodells notwendigen Teile vorhanden sind, beispielsweise in Form eines Abdrucklöffels oder dergleichen. Die Ausgestaltung zu einer vollständigen Platte ist lediglich für die Zwecke des Einsetzens in ein Kaumodell oder aus Festigkeitsgründen vorzusehen.

Für den auf dem Gebiet tätigen Fachmann ist auch ersichtlich, dass aus den beiden Ausführungsformen verschiedene Massnahmen ohne weiteres kombiniert oder gegenseitig sogar ergänzt werden können. So ist es durchaus denkbar, auch bei einer Zick-Zack-Führung nach einer Ausführungsform gemäss den Figuren 1 bis 4 einen Formschluss zwischen dem oberen Rand der Nut und dem Zahnabguss bzw. dessen Teilen entsprechend einer Ausführungsform nach den Figuren 5 bis 8 vorzusehen. Auch die Ausbildung des Formschlusses zwischen Nut und Feder in Form von aufeinanderfolgenden Nocken, einzelnen Nocken mit einem Abstand, unregelmässigen Rändern in Wellenform usw. sind im Rahmen der Erfindung ohne weiteres einsetzbar. Entscheidend, und das ist für den Fachmann aus den vorstehenden Ausführungen ersichtlich, ist allein, dass der einzelne Zahn bzw. Zahngruppen oder der gesamte Zahnabguss örtlich genau ohne zusätzliche Justiermassnahmen fixiert ist.

Auch eine Verriegelung, wie sie mit den Arretierungsarmen 9 (Fig. 6) im Eingriff mit den Nuten 10 (Fig. 7, 8) erläutert ist, kann auf andere Weise, beispielsweise unter Verwendung eines durch jeden Abschnitt der Feder eines Zahnes gehenden Zähne eines Rechens oder dergleichen erreicht werden.

**Patentansprüche**

1. Zahnkranzmodell bestehend aus einer Sokkelplatte (1), auf der der Zahnabguss (2) der jeweiligen Kieferpartie örtlich genau fixiert, jedoch abnehmbar dadurch gehalten ist, dass in der Sockelplatte (1) eine im wesentlichen entsprechend der Mittellinie des Zahnabgusses (2) verlaufende Haltenut (3) und im Zahnabguss (2) eine entsprechend geformte Feder (4) vorgesehen ist, wobei eine örtliche Fixierung einzelner Teile des Zahnabgusses mittels Unstetigkeiten im Verlauf der Feder (4) und Nut (3) dadurch erreicht wird, dass diese in einem Abstand angebracht sind, der kleiner als die Breite des schmälsten Zahnes in einem Abdruck ist, dadurch gekennzeichnet, dass zur unlösbaren Halterung des gegebenenfalls durch Schnitte unterteilten Zahnabgusses (2) in der Sockelplatte (1) eine Arretierung vorgesehen ist, bestehend aus einem aus der Sockelplatte (1) herausschwenkbaren Haltemesser (9), das in einen Arretierungsschlitz (10) in der Feder (4) des Zahnabgusses bzw. deren Einzelabschnitte eingreift.

2. Zahnkranzmodell nach Anspruch 1, dadurch gekennzeichnet, dass die Nut (3) in der Sockelplatte (1) durch zwei parallel verlaufende Bänder (5, 11) gebildet ist.

3. Zahnkranzmodell nach Anspruch 2, dadurch gekennzeichnet, dass die die Nut (3) begrenzenden Bänder aus Metallbändern (11) gebildet sind, die in die Sockelplatte (1) eingegossen sind.

4. Zahnkranzmodell nach Anspruch 2, dadurch gekennzeichnet, dass die die Haltenut (3) begrenzenden Bänder (5) aus einem Plastikmaterial gebildet sind und auf die Halteplatte (1) aufgesetzt sind.

5. Zahnkranzmodell nach Anspruch 3, dadurch gekennzeichnet, dass die Nut (3) längs der Mittellinie des Zahnabgusses (2) in Zick-Zack-Bewegungen geführt ist mit einer Zick-Zack-Folge, die kleiner ist als die Breite des kleinsten Zahnes eines Modells.

6. Zahnkranzmodell nach Anspruch 4, dadurch gekennzeichnet, dass die die Nut (3) begrenzenden Bänder (5) an der Oberseite Unregelmässigkeiten vorzugsweise in Form von Zähnen (6) aufweisen, die einen Formschluss mit entsprechenden Ausnehmungen (7) im Zahnabguss (2) bilden.

7. Zahnkranzmodell nach einem der Ansprüche 1 bis 6, dadurch gekennzeichnet, dass die Feder (4) in Form einer metallischen Leiste in den Zahnabguss (2) eingegossen ist.

8. Zahnkranzmodell nach Anspruch 7, dadurch gekennzeichnet, dass die in den Zahnabguss (2) eingegossene Feder (4) im eingegossenen Bereich Durchbrechungen aufweist.

9. Zahnkranzmodell nach Anspruch 1 bis 6, dadurch gekennzeichnet, dass die Feder (4) als Verlängerung (8) des Zahnabgusses (2) gebildet ist.

## Claims

1. A denture mould consisting of a base plate (1) on which the casting (2) of the respective part of the jaw is supported so as to be precisely fixed in position yet removable, in that the base plate (1) is provided with a supporting groove (3) which extends essentially in accordance with the centre line of the casting (2) and the casting (2) is provided with a correspondingly shaped spring (4), whereby a positional fixing of individual parts of the casting is effected by means of irregularities along the spring (4) and the groove (3) in that these are arranged at an interval which is shorter than the width of the narrowest tooth in a casting, characterised in that for the undetachable support of the casting (2), which is possibly divided up by means of cuts, the base plate (1) is provided with a lock consisting of a supporting blade (9) which can be pivoted out of the base plate (1) and engages into a locking slot (10) in the spring (4) of the casting or the individual sections thereof.

2. A denture mould as claimed in claim 1, characterised in that the groove (3) in the base plate (1) is formed by two strips (5, 11) which extend in parallel.

3. A denture mould as claimed in claim 2, characterised in that the strips which delimit the groove (3) consist of metal strips (11) which are cast into the base plate (1).

4. A denture mould as claimed in claim 2, characterised in that the strips (5) which delimit the support groove (3) consist of a plastic material and are positioned on the support plate (1).

5. A denture mould as claimed in claim 3, characterised in that the groove (3) extends along the centre line of the casting (2) in zig-zag movements with a zig-zag sequence which is shorter than the width of the smallest tooth of a mould.

6. A denture mould as claimed in claim 4, characterised in that the upper side of the strips (5) which delimit the groove (3) have irregularities, preferably in the form of teeth (6), which interlock with corresponding recesses (7) in the casting (2) by virtue of their shape.

7. A denture mould as claimed in one of claims 1 to 6, characterised in that the spring (4) is cast into the casting (2) in the form of a metallic strip.

8. A denture mould as claimed in claim 7, characterised in that the spring (4) which is cast into the casting (2) is provided with apertures in the cast zone.

9. A denture mould as claimed in one of claims 1 to 6, characterised in that the spring (4) forms an extension (8) of the casting (2).

## Revendications

1. Modèle de couronne dentaire, constituée par une plaque d'embase (1) sur laquelle l'empreinte dentaire (2) de la partie mâchoire concernée est fixée localement de façon précise, mais amovible, grâce au fait que dans la plaque d'embase (1) il est prévu une gorge de retenue (3) qui s'étend sensiblement de façon à correspondre à la ligne médiane de l'empreinte (2) et dans cette gorge de retenue, un ressort (4) de conformation correspondante, une fixation locale des différentes parties de l'empreinte étant obtenue à l'aide de discontinuités dans l'allure du ressort (4) et de la gorge (3) et grâce au fait que celles-ci sont prévues avec un écart qui est inférieur à la largeur de la dent la plus étroite dans une empreinte, caractérisé par le fait que pour assurer la fixation non détachable de l'empreinte dentaire (2) qui est éventuellement subdivisée par des entailles, il est prévu dans la plaque d'embase (1) un dispositif de blocage qui est constitué par une lame de maintien (9) qui est susceptible d'être basculée hors de la plaque d'embase (1), et qui pénètre dans une fente de blocage (10) ménagée dans le ressort (4) de l'empreinte dentaire dans des sections individuelles de ce ressort.

2. Modèle de couronne dentaire selon la revendication 1, caractérisé par le fait que la gorge (3) dans la plaque d'embase (1) est formée à l'aide de deux rubans (5, 11) qui s'étendent parallèlement entre eux.

3. Modèle de couronne dentaire selon la revendication 2, caractérisé par le fait que les rubans qui délimitent la gorge (3) sont constitués par des rubans métalliques (11) qui sont noyés dans la plaque d'embase (1).

4. Modèle de couronne dentaire selon la revendication 2, caractérisé par le fait que les rubans (5) qui délimitent la gorge de retenue (3) sont faits avec une matière plastique et sont montés sur la plaque d'embase (1).

5. Modèle de couronne dentaire selon la revendication 3, caractérisé par le fait que la gorge (3) s'étend en zig-zag le long de la ligne médiane de l'empreinte dentaire (2) avec une répétition de l'allure en zig-zag qui est inférieure à la largeur de la plus petite dent d'un modèle.

6. Modèle de couronne dentaire selon la revendication 4, caractérisé par le fait que les rubans (5) qui délimitent la gorge (3), comportent, sur le côté supérieur, des irrégularités, de préférence sous la forme de dents (6) qui forment une liaison par formes complémentaires avec des creux correspondants (7) ménagés dans l'empreinte dentaire (2).

7. Modèle de couronne dentaire selon l'une des revendications 1 à 6, caractérisé par le fait que le ressort (4) est noyé dans l'empreinte dentaire (2) sous la forme d'une réglette métallique.

8. Modèle de couronne dentaire selon la revendication 7, caractérisé par le fait que le ressort (4) noyé dans l'empreinte dentaire (2) présente des ouvertures dans sa partie noyée.

9. Modèle de couronne dentaire selon la revendication 1 à 6, caractérisé par le fait que le ressort (4) est formé en tant que prolongement (8) de l'empreinte dentaire (2).

FIG.1

FIG.2

FIG.3

FIG.4

FIG.5

FIG.6

FIG.7

FIG.8